Europäisches Patentamt

European Patent Office

Office européen des brevets

(19)

(11) **EP 1 066 497 B1**

(12) **EUROPÄISCHE PATENTSCHRIFT**

| | |
|---|---|
| (45) Veröffentlichungstag und Bekanntmachung des Hinweises auf die Patenterteilung:<br>**02.10.2002 Patentblatt 2002/40** | (51) Int Cl.⁷: **G01C 15/00**, G01S 5/16 |
| (21) Anmeldenummer: **99917860.1** | (86) Internationale Anmeldenummer:<br>**PCT/EP99/02041** |
| (22) Anmeldetag: **22.03.1999** | (87) Internationale Veröffentlichungsnummer:<br>**WO 99/049280 (30.09.1999 Gazette 1999/39)** |

(54) **VERFAHREN ZUR BESTIMMUNG DER POSITION UND DREHLAGE EINES OBJEKTES**

METHOD FOR DETERMINING THE SPATIAL AND ROTATIONAL POSITIONS OF AN OBJECT

PROCEDE PERMETTANT DE DETERMINER LA POSITION SPATIALE ET LA POSITION ANGULAIRE D'UN OBJET

| | |
|---|---|
| (84) Benannte Vertragsstaaten:<br>**AT CH DE ES FI FR GB IT LI SE** | • **AEBISCHER, Beat**<br>**CH-9435 Heerbrugg (CH)**<br>• **APPIUS, Raphael**<br>**CH-3703 Aeschi bei Spiez (CH)** |
| (30) Priorität: **23.03.1998 DE 19812609** | |
| (43) Veröffentlichungstag der Anmeldung:<br>**10.01.2001 Patentblatt 2001/02** | (74) Vertreter: **Kaminski, Susanne et al**<br>**Büchel, Kaminski & Partner**<br>**Austrasse 79**<br>**9490 Vaduz (LI)** |
| (73) Patentinhaber: **Leica Geosystems AG**<br>**9435 Heerbrugg (CH)** | |
| (72) Erfinder:<br>• **BRAUNECKER, Bernhard**<br>**CH-9445 Rebstein (CH)** | (56) Entgegenhaltungen:<br>**WO-A-90/07096**    **DE-C- 4 438 759**<br>**US-A- 4 652 917** |

**Beschreibung**

Die Erfindung betrifft ein Verfahren zur Bestimmung der Position und Drehlage eines Objektes im dreidimensionalen Raum entsprechend den Merkmalen im Oberbegriff des Anspruchs 1.

Die für die Erfindung in Frage kommenden Objekte sind vielfältig und in ihrer Funktion und Anwendung sehr unterschiedlich. Beispiele für solche Objekte sind Operationsmikroskope oder Operationswerkzeuge im medizinischen Bereich, Nivellierlatten in der geodätischen Vermessung, Geschützrohre im militärischen Bereich oder auch Antennen, insbesondere Richt- und Radarantennen. Eine wichtige Rolle spielt bei derartigen Objekten ihre Lage im Raum. Diese ist in einem vorgegebenen Koordinatensystem vollständig durch sechs reelle Lageparameter bestimmt, die sich aus drei Parametern für die Position (Translationsgruppe) und drei Parametern für die Drehlage (Rotationsgruppe) zusammensetzen. Die Position des Objektes ist durch die 3-dimensionalen Koordinaten eines auf dem Objekt ausgewählten Punktes gegeben. Die Drehlage des Objektes wird im allgemeinen durch den Richtungsvektor einer definierten Objektachse und den Drehwinkel des Objektes um die Objektachse beschrieben. Der Richtungsvektor der Objektachse ist ein Einheitsvektor mit der Länge 1, d.h. die Summe der Betragsquadrate seiner Komponenten ergibt 1.

In der WO 95/27918 wird eine Anordnung zur Bestimmung der räumlichen Lage eines Operationsmikroskopes mit Hilfe von codierten Lichtsignalen beschrieben, die von Leuchtdioden vorzugsweise im infrarotem Bereich emittiert und von Lichtrezeptoren empfangen werden. Ein Operationsmikroskop ist im allgemeinen kardanisch an einem Arm aufgehängt und kann in drei Raumrichtungen translatorisch bewegt und um drei Raumrichtungen gedreht werden, so daß seine Lage im Raum beliebig eingestellt werden kann. Auf dem Operationsmikroskop werden an bestimmten Stellen die Leuchtdioden oder Glasfasern angebracht, die mit Licht aus den Leuchtdioden gespeist werden. Alternativ können auch Reflektoren am Operationsmikroskop angebracht werden. Die Lichtrezeptoren sind an verschiedenen Stellen im Raum angeordnet und empfangen die jeweils für sie spezifizierten Lichtsignale. Daraus wird die räumliche Lage des Operationsmikroskops bestimmt. Bei gleichzeitig bekannter räumlicher Lage des Patienten sind somit die Koordinaten des durch das Operationsmikroskop betrachteten Operationsfeldes bekannt, was für die Mikrochirurgie unerläßlich ist.

Im geodätischen Vermessungswesen werden Nivellierlatten zur Bestimmung von Höhenfixpunkten und zur topographischen Vermessung eingesetzt. Ebenso finden sie in der Bauvermessung und im Verkehrswegebau Verwendung. Dabei wird eine Nivellierlatte mit der Fernrohroptik eines Nivelliergerätes anvisiert, um den Höhenunterschied zwischen Nivelliergerät und Nivellierlatte zu messen. Es wird vorausgesetzt, daß die Nivellierlatte senkrecht zur optischen Achse des Fernrohrs ausgerichtet ist. Da die optische Achse des Fernrohrs üblicherweise in einer horizontalen Ebene einjustiert wird, muß eine Bedienperson die Nivellierlatte mit Hilfe der daran angebrachten Libellen möglichst senkrecht ausgerichtet halten. Eine Verkippung der Nivellierlatte bewirkt einen Fehler in der Höhenmessung.

Mit dem Aufkommen von automatisierten Digital-Nivelliergeräten gemäß der DE 34 24 806 C2 wurde erstmals eine elektronische Lattenablesung möglich. Zu diesem Zweck wird auf der Nivellierlatte ein Codemuster aus schwarzen und weißen Elementen aufgebracht, von dem ein Teil mit Hilfe der Fernrohroptik des elektronischen Nivelliergerätes auf einem ortsauflösenden Detektor abgebildet wird. Hierbei wird die im Gesichtsfeld des Fernrohrs befindliche Information des Codemusters genutzt, um durch Vergleich mit dem als Referenzcodemuster im Nivelliergerät abgespeicherten Codemuster der Nivellierlatte den gewünschten Höhenmeßwert zu erhalten. Bei diesem Meß- und Auswerteverfahren wird zwar das gemessene Codemuster identifiziert, jedoch wird eine Verkippung der Nivellierlatte und der daraus resultierende Beitrag zur Meßungenauigkeit nicht berücksichtigt.

Ein spezielles Codemuster ist aus der DE 195 30 788 C1 bekannt. Eine Nivellierlatte mit einem rotationssymmetrischen Querschnitt besitzt auf ihrer Manteloberfläche Codeelemente, die rotationssymmetrisch zur Längsachse der Nivellierlatte geschlossene Linien bilden. Dadurch ist das Codemuster von allen Seiten sichtbar.

In der DE 44 38 759 C1 wird ein Verfahren zur Bestimmung des Kippwinkels von codierten Nivellierlatten in Meßrichtung mittels eines elektronischen Nivelliergeräts beschrieben. Dabei wird die Verkippung der Nivellierlatte ausschließlich in Meßrichtung, also in der Beobachtungsrichtung, berücksichtigt. Die dadurch entstehende Verzeichnung des Codemusters auf dem Detektor wird ausgewertet und der Kippwinkel bestimmt. Eine seitliche Verkippung der Nivellierlatte, die also quer zur Beobachtungsrichtung des Nivelliergerätes erfolgt, wird dabei aber nicht beachtet. Deswegen genügt als Detektor ein eindimensionales Diodenarray.

Aufgrund einer seitlichen Verkippung der Nivellierlatte entsteht ebenfalls ein Fehler in der Höhen- und Distanzmessung. Der Schnittpunkt der optischen Achse des Nivelliergerätes mit einer verkippten Nivellierlatte liegt an einer vom Fußpunkt der Nivellierlatte weiter entfernten Stelle als bei exakt senkrechter Ausrichtung der Nivellierlatte. Eine unzureichend senkrechte Ausrichtung durch ungenaue Libellenablesung des Bedienpersonals führt deshalb zu fehlerbehafteten Meßergebnissen. Nachträglich gibt es keine Möglichkeit zu einer Fehlerkorrektur. Zudem wird heute oft nur eine einzige Bedienperson eingesetzt, die das Nivelliergerät zur Nivelliermessung bedient. Die allein stehende Nivellierlatte ist den Windverhältnissen ausgesetzt, was zu entsprechenden Abweichungen bei der Nivelliermessung führt.

Bei einem Geschützrohr - und auch bei Richt- und Radarantennen gilt die folgende Ausführung in analoger Weise - geht es in erster Linie darum, dessen Ausrichtung im Raum festzustellen oder ein Schwenken des Geschützrohres in eine bestimmte vorgegebene Richtung zu bewirken und zu messen. Mit Hilfe von Encodern, die mit dem Geschützrohr mechanisch verbunden sind, wird die horizontale und vertikale Winkelstellung (Azimut und Elevation) des Geschützrohres gesteuert. Die Encoder enthalten im allgemeinen kodierte Drehscheiben, die über ein Getriebe beim Verschwenken des Geschützrohres eine Drehbewegung ausführen und dabei den Drehwinkeln entsprechende elektrische Signale liefern. Das mechanische Spiel ist bei derartigen Steuerungen nachteilig. Zudem führen die großen Thermo- und Schockbelastungen zu Ungenauigkeiten und zu erhöhtem Verschleiß.

Die US-A-4 652 917 beschreibt ein Verfahren zur Bestimmung der Drehlage eines Objektes, wobei der Abstand zwischen Kamera und Objekt entweder bekannt ist oder mittels zwei Kameras und Triangulation bestimmt wird.

Es ist die Aufgabe der Erfindung, ein Verfahren anzugeben, mit dem die Position und die Drehlage eines Objektes im dreidimensionalen Raum schnell und berührungslos bestimmt werden kann.

Die Aufgabe wird erfindungsgemäß durch die im Kennzeichen des Anspruchs 1 angegebenen Merkmale gelöst. Vorteilhafte Ausgestaltungen und Weiterbildungen der Erfindung ergeben sich aus den Unteransprüchen.

Zur Ermittlung der Position und Drehlage eines Objektes im Raum wird ein optischer Meßkopf verwendet. Der Meßkopf beinhaltet eine Abbildungsoptik und einen in zwei Dimensionen ortsauflösenden Detektor, der in der Fokusebene der Abbildungsoptik angeordnet ist. Das Objekt wird mit seinen Objektstrukturen durch die Abbildungsoptik auf den Detektor abgebildet. Die Objektstrukturen sind als a priori Information von vornherein bekannt. Die Objektstrukturen können die geometrische Form des Objekts und seine Ausmaße beinhalten oder sie können Markierungen an bestimmten Stellen auf dem Objekt sein oder sie sind ein Codemuster, das auf dem Objekt aufgebracht ist. Das auf dem Detektor zweidimensional vorliegende Bild des Objektes bzw. der Objektstrukturen wird in einer an dem Detektor angeschlossenen Auswerteeinheit ausgewertet.

Es gibt verschiedene Möglichkeiten für die Auswertung der zweidimensionalen Bildinformation. Zum Beispiel kann das Bild des Objektes mit berechneten Bildern verglichen werden. Aus der bekannten Geometrie des Objektes oder aus vorhandenen Markierungen auf dem Objekt oder aus einem vorhandenen Codemuster auf dem Objekt oder auch aus allen diesen Objektstrukturen zusammen kann unter Einbeziehung der bekannten Eigenschaften der Abbildungsoptik (und gegebenenfalls der Diskretisierung des ortsauflösenden Detektors) für beliebige sinnvolle Werte der eingangs genannten sechs Lageparameter das zu erwartende Detektorbild berechnet werden. Mit Hilfe von Optimierungsverfahren werden diejenigen Werte der Lageparameter bestimmt, die die beste oder zumindest eine hinreichend gute Übereinstimmung des berechneten Bildes mit dem tatsächlich aufgenommenen Bild liefern. Solche Optimierungsverfahren sind beispielsweise die Quasi-Newton-Verfahren (Bestimmung der minimalen Quadrate oder der maximalen Likelihood etc.), die aus K. Levenberg: "A method for the Solution of Certain nonlinear Problems in Least Squares", Quart. Apl. Math. 2 (1944), pp. 164-168 oder aus D. W. Marquardt: "An Algorithm for Least-squares Estimation of Nonlinear Parameters", SIAM J. Appl. Math. 11 (1963), pp. 431-441 oder aus J.J. Moré: "The Levenberg-Marquardt Algorithm: Implementation and Theory", Numerical Analysis, ed. G. A. Watson, Lecture Notes in Mathematics 630, Springer Verlag (1978), pp. 105-116 bekannt sind.

Eine andere Auswertemöglichkeit besteht darin, die auf dem Detektor abgebildeten Objektstrukturen hinsichtlich ihrer geometrischen Parameter zu analysieren und daraus die Lageparameter des Objektes zu bestimmen. Es werden also zunächst die ebene Position und Drehlage der abgebildeten geometrischen Formen (z.B. Randkonturen) oder des Codemusters auf dem Detektor und der Verlauf des sich in Abhängigkeit der Detektorkoordinaten ändernden Abbildungsmaßstabes gemessen und ermittelt. Bei Vorliegen eines Codemusters werden vorzugsweise komplett alle Codeelemente des auf dem Detektor abgebildeten Codemusters verwendet, da dadurch eine hohe Genauigkeit und vor allem eine große Robustheit und Stabilität des Auswertungsergebnisses erreicht werden kann. Für andere Anforderungen wie beispielsweise für ein besonders schnelles Vorliegen des Meßergebnisses genügt aber bereits die Auswertung von nur 3 dekodierten Codeelementen des Codemusters. Die Genauigkeit des Meßergebnisses ist dabei etwas eingeschränkt. Alternativ hierzu können auch nur die abgebildeten Randkonturen des Objektes ausgewertet werden.

Aus den ermittelten geometrischen Parametern der detektierten Objektstrukturen werden mit Hilfe der optischen Abbildungsgleichung und geometrischer Beziehungen (Vektoralgebra) die Lageparameter des Objektes bestimmt. Durch die Lageparameter, die wie eingangs erwähnt den Positionsvektor, den Richtungsvektor der Objektachse und den Drehwinkel des Objektes um die Objektachse beinhalten, ist die räumliche Lage des Objektes, also dessen Position und Drehlage rekonstruiert.

Selbstverständlich können die genannten Auswertemöglichkeiten auch miteinander kombiniert werden. Beispielsweise kann eine Grobbestimmung der Lageparameter durch eine grobe Auswertung der Randkonturen oder nur weniger Codeelemente erfolgen und sich eine Feinauswertung unter Einbeziehung der gesamten aufgenommenen Objektgeometrie oder aller aufgenommenen Codeelemente anschließen. Für die Feinauswertung können insbesondere auch die oben zitierten Optimierungsverfahren herangezogen und hierfür die aus der Grobauswertung bestimmten Lageparameter als Startparameter für die Optimierung genutzt werden.

Zweckmäßigerweise wird für die räumliche Lagebestimmung des Objektes ein 3-dimensionales kartesisches Koordinatensystem gewählt. Die Koordinaten des Meßkopfes und somit des Detektors sind in diesem Koordinatensystem bekannt. Das Koordinatensystem kann auch von vornherein so gewählt werden, daß es mit den Detektorkoordinaten übereinstimmt. Es versteht sich von selbst, daß die Lageparameter des Objektes in jedes beliebige sinnvolle Koordinatensystem umgerechnet werden können. Insbesondere kann die Drehlage des Objekts auch durch zwei Polarwinkel oder durch Azimut, Elevation und jeweils dem Drehwinkel des Objektes um die Drehachse oder auch durch drei Eulerwinkel angegeben werden.

Für die Erfindung ist ein in zwei Dimensionen ortsauflösender optoelektronischer Detektor notwendig. Dieser kann beispielsweise eine Vidiconkamera oder ein zweidimensionales CCD-Array sein. Es können aber auch mehrere nebeneinander angeordnete eindimensionale CCD-Arrays verwendet werden. Mit einem solchen Detektor und mittels der Abbildungsoptik wird das Objekt aufgenommen. Dabei werden die im Gesichtsfeld der Abbildungsoptik befindlichen Objektstrukturen abgebildet und detektiert. Der Detektor ist dabei mit seiner lichtempfindlichen Detektorfläche im allgemeinen senkrecht zur optischen Achse der Abbildungsoptik justiert. Der Schnittpunkt der optischen Achse mit der lichtempfindlichen Detektorfläche kann den Nullpunkt des Koordinatensystems des Detektors definieren.

Bei Verwendung eines CCD-Detektors mit diskreten lichtempfindlichen Pixelstrukturen kann mit geeigneten Objektstrukturen, insbesondere mit geeigneten Strukturen eines Codemusters die örtliche Auflösung des CCD-Detektors noch erheblich gesteigert werden. Dabei ist mehr als das 10-fache der Pixelauflösung des Detektors erreichbar. Die besondere Meßempfindlichkeit ergibt sich, wenn die Ortsgrundfrequenz oder eine der harmonischen Ortsoberfrequenzen der durch das Codemuster auf dem Detektor hervorgerufenen Intensitätsverteilung mit der Ortsgrundfrequenz der strahlungsempfindlichen Strukturen des Detektors ein niederfrequentes Überlagerungsmuster bildet. Das niederfrequente Überlagerungsmuster wirkt in derselben Art und Weise wie ein Moirémuster. Von Moirémustern ist bekannt, daß sie sehr empfindlich auf eine Verschiebung der sie erzeugenden Strukturen reagieren. Dies bedeutet hier, daß bereits bei einer sehr geringen Veränderung der Intensitätsverteilung auf dem Detektor gegenüber dessen Pixelstruktur sich das niederfrequente Überlagerungsmuster in seiner Ortsfrequenz stark ändert. Somit kann die Lage des abgebildeten Codemusters auf dem Detektor hochpräzise gemessen werden. Da eine Änderung des Überlagerungsmusters durch eine Änderung der Position und Drehlage des Objektes hervorgerufen wird, werden also die Lageparameter des Objektes im Raum sehr empfindlich und damit hochpräzise meßbar.

Ist das Objekt eine Nivellierlatte, so ist zusätzlich zu ihrer Position auch der Richtungsvektor ihrer Achse von Bedeutung, da er die Verkippung der Nivellierlatte aus der Senkrechten beschreibt. Neben den bekannten herkömmlichen Nivellierlatten, bei denen ein Codemuster auf einer ebenen Fläche aufgebracht ist, kann auch eine zu ihrer Längsachse rotationssymmetrische Nivellierlatte mit einem rotationssymmetrischen Strichcode verwendet werden. In diesem Fall kann die Abbildungsoptik dasselbe Codemuster sogar kontinuierlich von allen Seiten der Nivellierlatte aufnehmen. Durch die Bestimmung des Richtungsvektors der Nivellierlattenachse aus dem abgebildeten Codemuster oder den detektierten Konturen der Nivellierlatte wird sowohl die Neigung der Nivellierlatte in Blickrichtung der Abbildungsoptik als auch die laterale Neigung der Nivellierlatte quer zur Blickrichtung der Abbildungsoptik erfaßt. Somit wird die Abweichung der Nivellierlatte von der idealen Senkrechten ermittelt und in einer entsprechenden Korrektur für die Nivelliermessung berücksichtigt. Diese Korrektur erfolgt automatisch bei jeder Nivelliermessung. Damit kann sogar eine vorherige Ausrichtung der Nivellierlatte entfallen. Dadurch wird eine schnelle und präzise Geländevermessung mit nur einer einzigen Bedienperson und auch unabhängig von den Windverhältnissen ermöglicht. Wird darüber hinaus im gegebenen Fall auch der Drehwinkel der Nivellierlatte um ihre Achse bestimmt - ein geeignetes Codemuster oder bestimmte Markierungen vorausgesetzt -, so ergibt sich damit bei einem ortsveränderlichen Meßkopf automatisch auch dessen Anvisierrichtung.

Ist das Objekt ein Geschützrohr, so kann dieses analog zum Fall der Nivellierlatte mit verschiedenen Codemustern ausgestattet werden. Sollen nur Elevation und Azimut des Geschützrohres ermittelt werden, so genügt bereits ein zur Längsachse des Geschützrohres rotationssymmetrisches Codemuster oder nur die Randkontur des Geschützrohres. Wird zusätzlich ein Codemuster mit zur Längsachse parallel ausgerichteten Codestrichen auf das Geschützrohr aufgebracht, so kann zusätzlich dessen Drehwinkel um seine Achse bestimmt werden. Die Codestriche können dabei auch stochastisch ausgerichtet sein. Auch können Kombinationen dieser Codemuster verwendet werden, bei denen sich z.B. Segmente mit rotationssymmetrischen Coderingen und Segmente mit parallelen oder stochastischen Codestrichen abwechseln. Vorteilhaft ist auch ein um das Geschützrohr spiralförmig aufgewickeltes Codemuster, mit dem etwa gleiche Empfindlichkeit für den Richtungsvektor der Geschützrohrachse und den Drehwinkel des Geschützrohres um seine Achse erreicht werden kann. Es kann aber auch ein Codemuster mit einer vollkommen unregelmäßigen Struktur verwendet werden, wie sie beispielsweise militärische Tarnmuster besitzen. Entscheidend für alle Codemuster ist, daß sie entweder von sich aus bekannt sind oder durch eine Vermessung ermittelt werden. Vorteilhaft sind dabei solche Codemuster, für die Korrelationsverfahren leicht anwendbar sind.

Mittels der Abbildungsoptik werden die Konturen des Geschützrohres oder / und das Codemuster aufgenommen und die Drehlage des Geschützrohres berührungslos ermittelt. Gegebenenfalls kann das Geschützrohr aktiv beleuchtet werden, z.B. mit infrarotem Licht. Das Geschützrohr bzw. das aufgebrachte Codemuster können auch selbstleuchtend sein. Bei einer im allgemeinen festen Arretierung von Abbildungsoptik und Detektor gegenüber dem Geschützrohr und aufgrund der optischen Vermessung ergibt sich der große Vorteil, daß keinerlei mechanisch bewegliche Komponenten zur Bestimmung von Azimut, Elevation und Drehwinkel des Geschützrohres notwendig sind. Diese berührungslose Vermessung läuft schnell ab und liefert präzise Ergebnisse.

Ist das Objekt ein im medizinischen Umfeld - insbesondere in der automatisierten Mikrochirurgie - eingesetztes Hilfsmittel wie z.B. ein Operationsmikroskop, ein Operationswerkzeug (Skalpell, Bohrer, endoskopisches Mittel, etc.) oder auch eine Strahlungsquelle zur Tumorbehandlung, so muß eine gute Sichtbarkeit der Objektstrukturen des Hilfsmittels für den Meßkopf gewährleistet sein. Bei der Handhabung mit dem Hilfsmittel kann dieses von Personen oder Instrumenten zeitweilig verdeckt und die Blickrichtung zum Meßkopf unterbrochen werden. Soll unter diesen Bedingungen aber ständig die räumliche Lage des Hilfsmittels gemessen werden, so ist es nützlich, wenn sich die von dem Meßkopf zu erfassenden Objektstrukturen an einer exponierten Stelle des Hilfsmittels befinden, damit sie möglichst gut in freier Blickrichtung zum Meßkopf liegen. Bei Verwendung eines Codemusters kann ein solches dabei auch an mehreren Stellen des Hilfsmittels aufgebracht sein oder es kann sogar die gesamte Oberfläche des Hilfsmittels überdecken. Der Meßkopf kann für eine optimale Aufnahme räumlich beweglich sein oder es werden vorzugsweise mehrere im Raum verteilt angeordnete Meßköpfe gleichzeitig verwendet. Die Redundanz der von mehreren Meßköpfen gelieferten Ergebnisse erfüllt zudem die im medizinischen Bereich gestellte Forderung nach besonderer Gerätesicherheit.

Im übrigen kann das Objekt auch der Patient selbst sein, d.h. genauer ein mit dem Patienten fest verbundener Rahmen, der das Koordinatensystem des Patienten definiert. Gerade bei Operationen von Tumoren im Gehirn wird ein solcher Rahmen am Kopf des Patienten fixiert, wobei die räumliche Lage des Tumors bezüglich des Rahmens z.B. durch vorherige Computertomographie-Aufnahmen ermittelt wird. Werden die geometrischen Strukturen des Rahmens oder die auf dem Rahmen aufgebrachten Codemuster von den Meßköpfen aufgenommen und die räumliche Lage des Rahmens bestimmt, so sind die Koordinaten des Tumors auch im Koordinatensystem der Meßköpfe bekannt. Da zudem auch die räumliche Lage des Operationsmikroskops und der Operationswerkzeuge mit Hilfe der Meßköpfe festgestellt wird, kann eine endoskopische Navigation durch das Gehirn zum Tumor vollautomatisch erfolgen.

Bei allen genannten Anwendungsbeispielen der Erfindung kann es vorkommen, daß sich ein Objekt schlecht mit einem zu verwendenden Codemuster versehen läßt oder das Objekt bereits als fertiges Bauteil vorliegt. In solchen Fällen besteht die Möglichkeit, einen mit einem Codemuster versehen separaten Körper am Objekt exzentrisch anzubringen ("Boosterprinzip"). Der Körper kann eine zylindrische Form besitzen. Natürlich können auch mehrere solcher Körper an einem Objekt angebracht werden. Wenn sich das Objekt im Raum bewegt, vollführt auch der separat angebrachte Körper eindeutig gekoppelte Bewegungen, insbesondere Drehbewegungen, so daß stets auf die Position und Drehlage des Objektes rechnerisch geschlossen werden kann.

Zudem kann ein Objekt auch stereoskopisch aufgenommen werden. Hierzu können entweder zwei Meßköpfe eine Stereobasis bilden. Oder die Stereobasis wird durch einen Meßkopf zusammen mit einem Einblendspiegel oder durch mehrere Einblendspiegel aufgebaut, so daß der Meßkopf stereoskopische Bilder vom Objekt aufnehmen kann. Durch diese zusätzliche Bildinformation kann die Genauigkeit der Lagebestimmung des Objektes noch gesteigert werden - in Analogie zum Sehen mit zwei Augen.

Schließlich kann auch ein Entfernungsmesser mit dem Meßkopf verbunden oder in diesen integriert werden. Mit einer solchen zusätzlichen Information über die Entfernung des Objektes ist ebenfalls eine Steigerung der Meßgenauigkeit möglich. Zudem kann mit der zusätzlichen Information das Meßergebnis über die Objektlage schneller vorliegen.

Im folgenden werden Ausführungsbeispiele der Erfindung anhand der Zeichnung näher erläutert. Es zeigt:

Fig.1    eine schematische Darstellung der Drehlage eines mit einem Codemuster versehenen Objekts und der Aufnahme der Objektstrukturen durch einen Meßkopf mit einem optischen Abbildungssystem und einem ortsauflösenden Detektor,

Fig.2    eine schematische Darstellung von Detektoraufnahmen des Objekts bei verschiedenen Drehlagen,

Fig.3    eine Darstellung geometrischer Zusammenhänge zur Ermittlung der Drehlage und des Positionsvektors des Objekts,

Fig.4       eine schematische Darstellung eines als medizinisches Hilfsmittel ausgebildeten Objekts und dessen Aufnahme durch mehrere Meßköpfe,

Fig.5a,b       separate, mit einem Codemuster versehene Körper, die an dem zu vermessenden Objekt angebracht sind,

Fig. 6a,b,c       eine schematische Darstellung zur Stereoaufnahme des Objektes und

Fig. 7a,b       eine schematische Darstellung des Meßkopfes mit einem Entfernungsmesser.

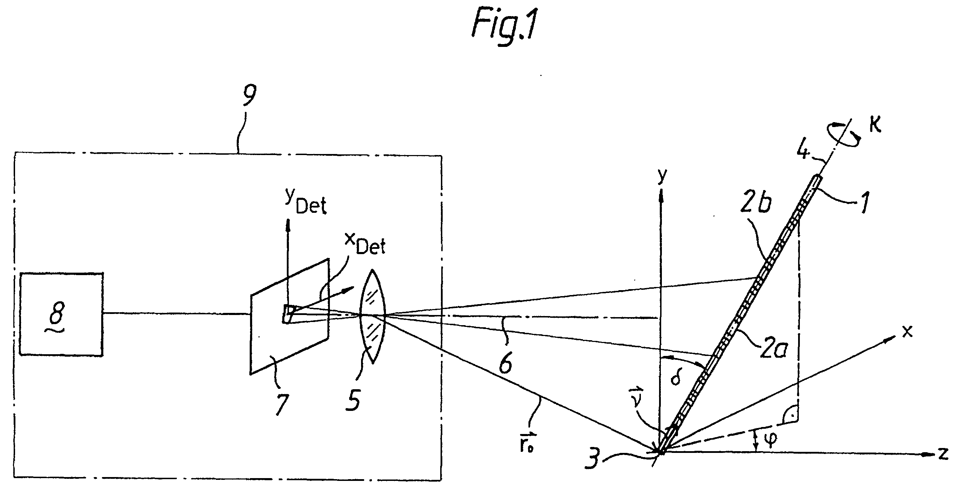

Fig.1 zeigt schematisch ein Objekt 1 in einem rechtwinkligen Koordinatensystem x, y, z. Das Objekt 1 besitzt einen Fußpunkt 3 und eine Objektachse 4 und kann mit einem Codemuster 2b versehen sein. Die Objektkonturen 2a oder / und das Codemuster 2b sind entweder von vornherein bekannt oder sie werden vermessen, so daß sich die Größe, Form und der Abstand der Details der Objektkonturen 2a bzw. der einzelnen Codeelemente des Codemusters 2b zum Fußpunkt 3 des Objektes 1 ergeben. Die Objektkonturen 2a sind im einfachsten Fall gerade Linien. In Fig.1 sind die Objektkonturen 2a zusätzlich rotationssymmetrisch zur Objektachse 4 dargestellt wobei in diesem Spezialfall der Drehwinkel $\kappa$ des Objektes 1 um die Achse 4 nicht alleine aus den Objektkonturen 2a ermittelt werden kann.

Mit Hilfe einer in einem Meßkopf 9 befindlichen Abbildungsoptik 5 wird der in ihrem Gesichtsfeld befindliche Teil der Objektstrukturen 2a, 2b auf einen zweidimensional ortsauflösenden optoelektronischen Detektor 7 abgebildet. Die elektrischen Signale des Detektors 7 werden in einer Auswerteeinheit 8 ausgewertet. Die Auswerteeinheit 8 ist gemäß der Darstellung in Fig. 1 ebenfalls im Meßkopf 9 integriert. Grundsätzlich kann sich die Auswerteeinheit 8 natürlich auch außerhalb des Meßkopfes 9 befinden wie beispielsweise in einer separaten Elektronikanordnung oder in einem Rechner (PC).

In der lichtempfindlichen Detektorebene des Detektors 7 ist ein Koordinatensystem $x_{Det}$, $y_{Det}$ definiert, wobei dessen Koordinatennullpunkt im Schnittpunkt der optischen Achse 6 der Abbildungsoptik 5 mit der Detektorebene gewählt ist. Die senkrecht zur Detektorebene angeordnete optische Achse 6 ist parallel zur z-Achse des Koordinatensystems x, y, z ausgerichtet. Im Falle einer horizontierten Abbildungsoptik 5 ist die y-Achse zugleich die Senkrechte zur Erdoberfläche. Selbstverständlich können auch andere Koordinatensysteme verwendet werden.

Die Lage des Objektes 1 im Raum ist durch sechs Lageparameter eindeutig bestimmt. Sie ergeben sich aus den Komponenten des Positionsvektors $\bar{r}_0$, den Komponenten des Richtungsvektors $\bar{v}$, der wegen seiner Eigenschaft als Einheitsvektor nur zwei unabhängige Parameter enthält, und dem Drehwinkel $\kappa$ des Objektes 1 um seine Achse 4. Der Positionsvektor $\bar{r}_0$ zeigt von der Abbildungsoptik 5 zum Fußpunkt 3 des Objektes 1. Der Richtungsvektor $\bar{v}$ weist in die Richtung der Objektachse 4 und gibt somit deren Lage im Raum an. Anstelle des Richtungsvektors $\bar{v}$ kann die Lage der Objektachse 4 auch durch den von der vertikalen y-Achse aus gemessenen Winkel $\delta$ und den von der y-z-Ebene aus gemessenen horizontalen Winkel $\varphi$ beschrieben werden. Bei eindeutigen Objektkonturen 2a oder eindeutigem Codemuster 2b kann der Drehwinkel $\kappa$ um die Objektachse 4 ermittelt werden. Der Drehwinkel $\kappa$ kann z.B. von der Ebene aus gemessen werden, die vom Positionsvektor $\bar{r}_0$ und vom Richtungsvektor $\bar{v}$ aufgespannt wird. Somit ist die vollständige Drehlage des Objektes 1 bestimmt.

Die Lageparameter des Objektes 1 werden erfindungsgemäß aus der ebenen Lage und der lokalen Verzeichnung der auf dem Detektor 7 abgebildeten Objektstrukturen 2a,2b bestimmt. Je nach Größe der Polarwinkel $(\varphi,\delta)$ und des Positionsvektors $\bar{r}_0$ verändern sich die in Fig.1 schematisch dargestellte Lage und Verzeichnung der Objektstrukturen 2a,2b auf dem Detektor 7.

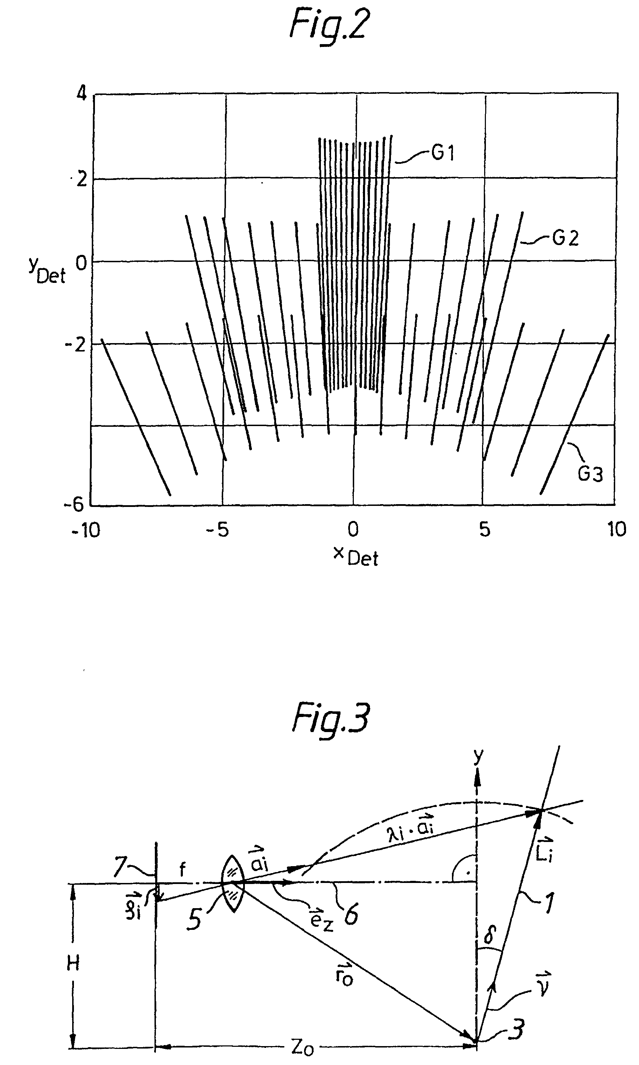

Hierzu sind in Fig.2 schematisch Abbildungen des Objekts 1 bei verschiedenen Polarwinkeln $(\varphi,\delta)$ auf dem Detektor 7 gezeigt. Jede der dargestellten Linien im Detektorkoordinatensystem $x_{Det}$, $y_{Det}$ entspricht symbolisch der Abbildung desselben von der Abbildungsoptik 5 erfaßten Ausschnitts des Objekts 1 jeweils für ein unterschiedliches Paar Polarwinkel $(\varphi,\delta)$. Die einzelnen Codeelemente eines eventuell vorhandenen Codemusters 2b sind hierbei nicht mit dargestellt.

Aus der Fig.2 sind drei Gruppen von Linien G1, G2, G3 erkennbar, die drei unterschiedliche vertikale Winkel $\delta$ repräsentieren. Der Gruppe G1 im oberen Bereich der Fig.2 kann ein kleiner vertikaler Winkel $\delta$ zugeordnet werden, während ein großer Winkel $\delta$ die Gruppe G3 hervorruft. Innerhalb einer jeden Gruppe G1, G2, G3 variiert der horizontale Winkel $\varphi$, wobei den Linien bei positiven bzw. negativen Koordinatenwerten von $x_{Det}$ entsprechend große negative bzw. positive Winkel $\varphi$ zuzuordnen sind.

Die unterschiedlichen Längen der Linien in Abhängigkeit von $\varphi$ und $\delta$ weisen auf den unterschiedlichen Abbildungsmaßstab je nach Drehlage des Objekts 1 hin. Dabei variiert der Abbildungsmaßstab der Objektstrukturen 2a,2b entlang einer jeden Linie, denn die Objektstrukturen 2a,2b sind aufgrund der Drehlage des Objekts 1 unterschiedlich weit von der Abbildungsoptik 5 entfernt. Der Abbildungsmaßstab ergibt sich aus dem Quotienten der bekannten Größe der Objektstrukturen 2a,2b auf dem Objekt 1 und der gemessenen Größe der Objektstrukturen 2a,2b auf dem Detektor 7. Mit Hilfe der Brennweite $f$ der Abbildungsoptik 5 errechnet sich daraus nach den Gesetzen der geometrischen Optik der Abstand zwischen der Abbildungsoptik 5 und den Objektstrukturen 2a,2b auf dem Objekt 1.

Hierzu ist in Fig.3 die geometrische Situation dargestellt. Um das Prinzip klarer darzustellen, wird die Dicke des Objektes 1 außer Acht gelassen. Der Anzielpunkt kann dann mit dem Fußpunkt 3 zusammenfallen und beide sind durch den Positionsvektor $\bar{r}_0$ gegeben. Die Objektstrukturen 2a,2b sollen in diesem Fall ein Codemuster 2b sein. Das i-te Codeelement des Codemusters 2b befindet sich in einem festen, bekannten Abstand $|\bar{L}_i|$ vom Fußpunkt 3 des Objekts 1. Dabei ist vorausgesetzt, daß die Nummer i des Codeelements bekannt ist; dies kann entweder durch Abzählen erreicht werden, wenn das gesamte Codemuster 2b auf dem Detektor 7 abgebildet ist, oder durch Decodieren eines genügend langen abgebildeten Teilstücks des Codemusters 2b. Durch die Abbildungsoptik 5 mit der Brennweite $f$ wird das i-te Codeelement auf dem Detektor 7 in einem Abstand $|\bar{\rho}_i|$ von der optischen Achse 6 abgebildet. Die Vektoren $\bar{\rho}_i$ und $\bar{L}_i$ sind dreidimensional, wobei $\bar{\rho}_i$ in der Ebene des Detektors 7 liegt. Im allgemeinen befinden sich die Vektoren $\bar{\rho}_i$ und $\bar{L}_i$ nicht in der Zeichenebene der Fig.3. Im folgenden werden zwei Fälle unterschieden.

In einem ersten Fall soll der Positionsvektor $\bar{r}_0$ von der Abbildungsoptik 5 zum Fußpunkt 3 des Objekts 1 vorgegeben sein. Der vorgegebene Positionsvektor $\bar{r}_0$ bedeutet, daß die Abbildungsoptik 5 und der Fußpunkt 3 des Objekts 1 gegeneinander unveränderlich sind. Der Positionsvektor $\bar{r}_0$ kann durch eine einfache mechanische Messung oder bei höheren Anforderungen auch durch eine Laservermessung oder durch eine Kalibriermessung, bei der sich das Objekt 1 in einer vorbekannten räumlichen Lage befindet, ermittelt werden. Eine solche gegenseitige Fixierung von Meßkopf 9 und Objekt 1 kann beispielsweise bei einem Geschützrohr als Objekt 1 der Fall sein. Mit dem bekannten Positionsvektor $\bar{r}_0$ werden die Polarwinkel $(\varphi,\delta)$ des Geschützrohres ermittelt, wodurch dieses in eine vorgegebene Drehlage gebracht oder eingeregelt werden kann. Innerhalb des Schwenkbereichs des Geschützrohres muß das Codemuster 2 wenigstens zu einem Teil von der Abbildungsoptik 5 erfaßt werden können.

Aus den nachfolgenden Gleichungen wird der Abstand $|\lambda_i\bar{a}_i|$ der Abbildungsoptik 5 zum i-ten Codeelement des Codemusters 2 ermittelt, wobei

$$\bar{a}_i = f\cdot\bar{e}_z - \bar{\rho}_i$$

und $\bar{e}_z$ der Einheitsvektor in positiver z-Richtung ist. Der Vektor $\bar{a}_i$ ist somit bekannt, während $\lambda_i$ der zu bestimmende Multiplikationsfaktor ist. Es gilt die Vektorgleichung

$$\bar{L}_i = \lambda_i\cdot\bar{a}_i-\bar{r}_0.$$

Durch die Bildung des Betragsquadrats ergibt sich die folgende quadratische Gleichung für $\lambda_i$:

$$|\bar{a}_i|^2\cdot\lambda_i^2 - 2\cdot(\bar{r}_0\cdot\bar{a}_i)\cdot\lambda_i + |\bar{r}_0|^2 - |\bar{L}_i|^2 = 0.$$

Somit gibt es für $\lambda_i$ zwei Lösungen, die in Fig.3 anschaulich durch die beiden Schnittpunkte des gestrichelt gezeichneten Kreisbogens mit der Beobachtungsrichtung $\bar{a}_i$ zum i-ten Codeelement dargestellt sind. Die Eindeutigkeit der Lösung wird durch die Verzeichnung des i-ten Codeelements auf dem Detektor 7 festgestellt. Die Verzeichnung beschreibt die Abweichung der Form des abgebildeten Codeelements (oder generell des Objektes 1) gegenüber seiner Form, die es bei der "Nullstellung" (Polarwinkel $\varphi=0$ und $\delta=0$) des Objektes 1 besitzt.

Aufgrund des aus den obigen Gleichungen ermittelten Abstandes $|\lambda_i\bar{a}_i|$ zum i-ten Codeelement und des aus dem detektierten Vektor $\bar{\rho}_i$ ermittelten Vektors $\bar{a}_i$ ergeben sich die dreidimensionalen Koordinaten des Vektors $\bar{L}_i$. Daraus ergibt sich sofort der Richtungsvektor

$$\bar{\nu} = \frac{\bar{L}_i}{|\bar{L}_i|},$$

woraus sich leicht mittels trigonometrischer Funktionen die Polarwinkel $(\varphi,\delta)$ berechnen lassen. Somit genügt bei bekanntem Positionsvektor $\bar{r}_0$ bereits die Messung eines einzigen Codeelementes zur Berechnung der Polarwinkel $(\varphi,\delta)$. Die Genauigkeit der Polarwinkelberechnung kann natürlich durch die Einbeziehung mehrerer Codeelemente des Codemusters 2b wesentlich erhöht werden. Ist zudem ein bezüglich des Drehwinkels $\kappa$ eindeutiges Codemuster 2b auf dem Objekt 1 aufgebracht, so kann zugleich auch der Drehwinkel $\kappa$ des Objektes 1 um seine Achse 4 aus dem abgebildeten Codemuster 2b bestimmt werden. Somit ist die gesamte Drehlage des Objektes 1 schnell, präzise und berührungslos erfaßt.

In einem weitergehenden zweiten Fall sollen der Meßkopf 9 und das Objekt 1 räumlich gegeneinander variabel sein. Dann ist neben der Drehlage auch der Positionsvektor $\bar{r}_0$ unbekannt. Die zusätzliche Bestimmung des Positionsvektors $\bar{r}_0$ ist insbesondere bei einer Nivellierlatte, einem Operationsmikroskop oder einem Operationswerkzeug als Objekt 1 essentiell (und kann natürlich auch bei dem oben genannten Geschützrohr erfolgen). Bei Nivelliermessungen ist der Positionsvektor $\bar{r}_0$ - insbesondere der Abstand $Z_0$ und die Höhe H der Abbildungsoptik 5 zum Fußpunkt 3 der Nivellierlatte - sogar die eigentlich interessierende Meßgröße. Wird zugleich auch der Richtungsvektor $\bar{\nu}$ der von der exakten Senkrechten stets etwas abweichenden Nivellierlatte ermittelt, so hat dies die weiter oben genannten vorteilhaften Auswirkungen auf die Genauigkeit der Nivelliermessung und die Handhabung beim Nivelliervorgang. Dabei kann sogar bewußt auf eine senkrechte Ausrichtung der Nivellierlatte verzichtet werden und die Anbringung einer Libelle an die Nivellierlatte kann entfallen. Bei den genannten medizinischen Hilfsmitteln für die Diagnose, Therapie oder Operation schließlich ist die Kenntnis des Positionsvektors $\bar{r}_0$, des Richtungsvektors $\bar{v}$ und des Drehwinkels $\kappa$ gleichermaßen von Bedeutung.

Zur gleichzeitigen Bestimmung von $\bar{r}_0$ und $\bar{v}$ genügt es im Prinzip, aus dem auf dem Detektor 7 abgebildeten Codemuster 2b nur drei Codeelemente auszuwählen, deren Code-Nummern i zu bestimmen und auf diese Codeelemente die durch die obigen Gleichungen beschriebene Vektormathematik anzuwenden.

Dabei ist es natürlich für die Genauigkeit und Sicherheit des Ergebnisses vorteilhaft, zusätzliche oder alle detektierten Codeelemente für die Auswertung heranzuziehen und die beschriebene Vektormathematik anzuwenden. Darüber hinaus können auch aus der Mathematik allgemein bekannte Schätz- und Ausgleichsverfahren eingesetzt werden. Auch mit Hilfe von Iterationsverfahren und ähnlichen mathematischen Methoden können die obigen Vektorgleichungen gelöst werden.

Anstelle der Codeelemente des Codemusters 2b können auch Details von Objektkonturen 2a oder Markierungen auf dem Objekt 1 in analoger Weise ausgewertet werden.

Vorteilhafterweise können die so ermittelten Lageparameter des Objektes 1 in nachfolgende Optimierungsverfahren eingesetzt und dadurch noch genauer bestimmt werden. Dabei werden die Lageparameter so lange variiert, bis das aus den Lageparametern errechnete Detektorbild der Objektstrukturen 2a, 2b optimal mit der tatsächlich detektierten Bildinformation übereinstimmt. Prinzipiell können die Optimierungsverfahren aber auch unabhängig von vorhergehenden Berechnungen durchgeführt werden.

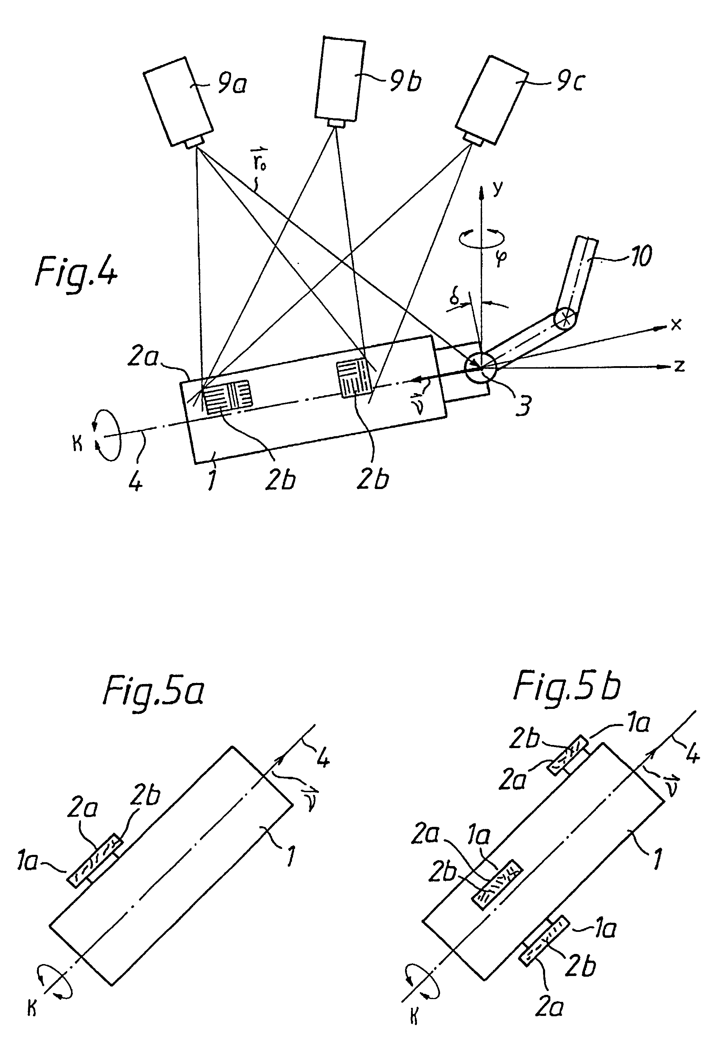

Fig. 4 zeigt schematisch als Objekt 1 ein Hilfsmittel für den medizinischen Bereich, dessen räumliche Position und Drehlage bezüglich eines Patienten von entscheidender Bedeutung ist. So kann das Objekt 1 ein Operationsmikroskop, ein Operationswerkzeug wie z.B. ein Skalpell, ein Bohrer, ein Endoskop etc. oder ein mit dem Patienten fest verbundener Rahmen oder auch eine Strahlungsquelle zur Tumorbehandlung sein. Das Objekt 1 kann wie in Fig.4 schematisch gezeigt an mehreren Stellen auf seiner Oberfläche mit einem Codemuster 2b versehen sein. Die räumliche Position des Objektes 1 wird beispielsweise mit Hilfe eines Schwenkarmes 10 verändert. Zudem ist das Objekt 1 an einem Drehpunkt 3 in den drei Winkeln $\varphi, \delta, \kappa$ drehbar am Schwenkarm 10 gelagert, so daß auch seine Drehlage beliebig eingestellt werden kann. Somit kann das Objekt 1 - beispielsweise bei einer Gehirnoperation - in eine beliebige erforderliche räumliche Lage am Kopf des Patienten gebracht werden.

Dabei kann das Objekt 1 von mehreren Meßköpfen 9a,9b,9c aufgenommen und aus den Objektstrukturen 2a,2b gemäß den obigen Gleichungen oder mit Hilfe der Optimierungsmethoden ausgewertet werden. Aus Redundanzgründen und wegen der möglichen Verdeckung de Objektstrukturen 2a,2b durch Personen oder Instrumente sind mehrere Meßköpfe 9a, 9b,9c im Raum angeordnet. Die räumlichen Koordinaten des Drehpunktes 3 (Positionsvektor $\bar{r}_0$) und die Drehlage $\varphi, \delta, \kappa$ des Objektes 1 können bezüglich eines jeden Meßkopfes 9a, 9b, 9c ermittelt werden. Da die räumliche Lage der Meßköpfe 9a, 9b, 9c untereinander bekannt ist, können die Lageparameter des Objektes 1 in ein übergeordnetes Koordinatensystem, z.B. in das Koordinatensystem des Patienten transformiert werden. Somit kann dem Chirurgen die genaue räumliche Lage des Operationsmikroskopes oder der Operationsinstrumente bezüglich des Operationsgebietes angezeigt werden. Zudem können die Operationsinstrumente vollautomatisch geführt werden.

In Fig.5a ist schematisch ein Objekt 1 dargestellt, an dem ein separater Körper 1a angebracht ist. Durch die erfindungsgemäße Vermessung und Auswertung der Objektstrukturen 2a, 2b des Körpers 1a wird die (6-dimensionale) räumliche Lage des Körpers 1a und somit auch die des Objekts 1 ermittelt. Vorteilhafterweise kann ein Objekt 1, das für einen Anwendungszweck nur ungenügende Strukturen aufweist, nachträglich mit einem geeigneten Körper 1a ausgestattet werden. Gegebenenfalls kann der Körper 1a auch leicht wieder entfernt werden. Selbstverständlich können auch mehrere derartige Körper 1a an einem Objekt 1 befestigt sein (Fig.5b).

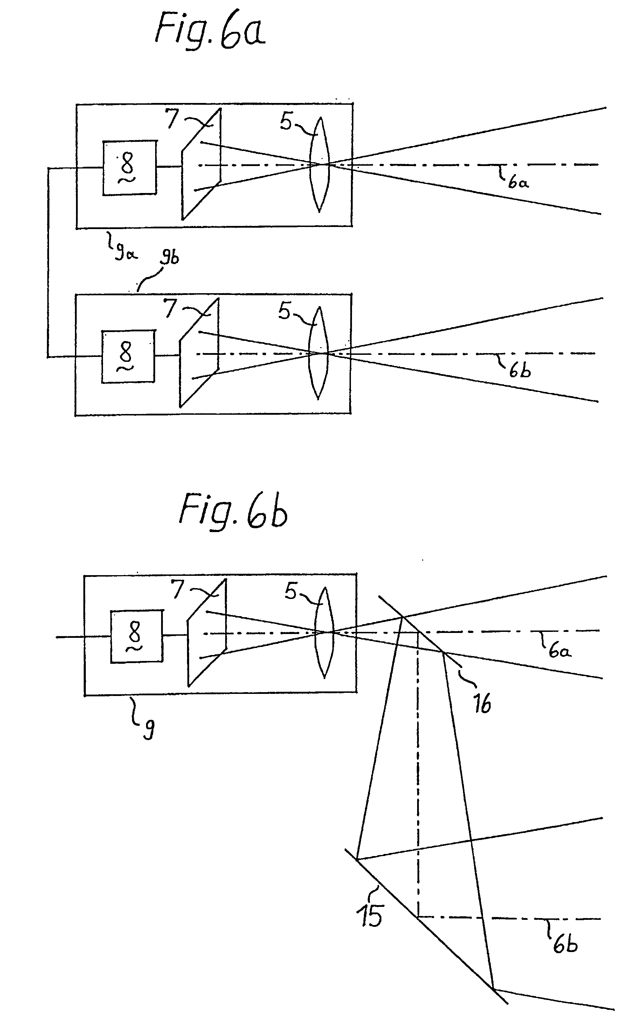

Fig. 6a zeigt eine stereoskopische Anordnung von zwei Meßköpfen 9a und 9b, mit der aufgrund der zusätzlichen Bildinformation eine höhere Genauigkeit der Bestimmung der Objektlage ermöglicht werden kann. Die Meßköpfe 9a und 9b können einerseits fest miteinander verbunden sein, so daß die gegenseitige Lage ihrer optischen Achsen 6a, 6b fixiert ist. Die Achsen 6a, 6b können zueinander einen Winkel bilden. Vorzugsweise werden sie wegen geringem Montageaufwand parallel zueinander ausgerichtet. Andererseits kann es vorteilhaft sein, die beiden Meßköpfe 9a, 9b gegeneinander variabel zu halten und erst bei deren Aufstellung zur Vermessung des Objektes 1 eine geeignete Justierung vorzunehmen. Wird das Objekt 1 in eine anfängliche, vorbekannte Lage gebracht, kann eine Selbstkalibrierung die gegenseitige Lage der optischen Achsen 6a, 6b der Meßköpfe 9a, 9b automatisch einstellen. Es versteht sich von selbst, daß die Meßköpfe 9a, 9b bei Bedarf in einem einzigen Gehäuse untergebracht werden können.

Eine Variante der stereoskopischen Anordnung ist in Fig. 6b dargestellt. Es wird nur ein Meßkopf 9 verwendet, der das eine Stereo-Teilbild direkt und das andere Stereo-Teilbild über einen seitlich angeordneten Spiegel 15 aufnimmt. Die Einkopplung des über diesen Spiegel 15 aufgenommenen Lichtes in den Strahlengang des Meßkopfes 9 erfolgt entweder über einen klappbaren Einkoppelspiegel 16, der je nach seiner Stellung nur das eine oder nur das andere Stereo-Teilbild zur Bildaufnahme mit dem Detektor 7 des Meßkopfes 9 freigibt. Oder der Einkoppelspiegel 16 ist z. B. gemäß der Funktion eines LCD-Shutters in seinen Reflexions- und Transmissionseigenschaften so steuerbar, daß die beiden Stereo-Teilbilder abwechselnd - einmal bei hoher Transmission und einmal bei hoher Reflexion des Einkoppelspiegels 16 - den Detektor 7 erreichen. Andererseits kann ein halbdurchlässiger Einkoppelspiegel 16 verwendet werden, der die beiden Stereo-Teilbilder gleichzeitig auf unterschiedliche Detektorbereiche des Detektors 7 oder auf zwei getrennte Detektoren 7 bringt. Dies ist bei geeigneter Verkippung des halbdurchlässigen Spiegels 16 und einer darauf abgestimmten Abbildungsoptik 5 möglich.

Natürlich kann eine Stereobasis auch durch zwei Spiegel 15a, 15b gemäß Fig. 6c erzeugt werden und die zugehörigen Stereo-Teilbilder über einen drehbaren Spiegel 17 abwechselnd vom Detektor 7 empfangen werden. Der drehbare Spiegel 17 kann auch durch ein drehbares oder feststehendes Prisma ersetzt werden. Im Fall des feststehenden Prismas oder mit einer geeigneten Spiegelanordnung kann eine gleichzeitige Abbildung beider Stereo-Teilbilder auf unterschiedliche Bereiche des Detektors 7 erfolgen.

Anstelle der Stereobildaufnahme oder zusätzlich dazu kann auch die Entfernung zum Objekt 1 mit einem Distanzmeßgerät 18, 18a ermittelt werden und als weitere Meßinformation in die Auswertung einfließen. Der Distanzmeßwert verbessert die Genauigkeit oder/und die Schnelligkeit der Auswertung zur Ermittlung der Lageparameter des Objektes 1.

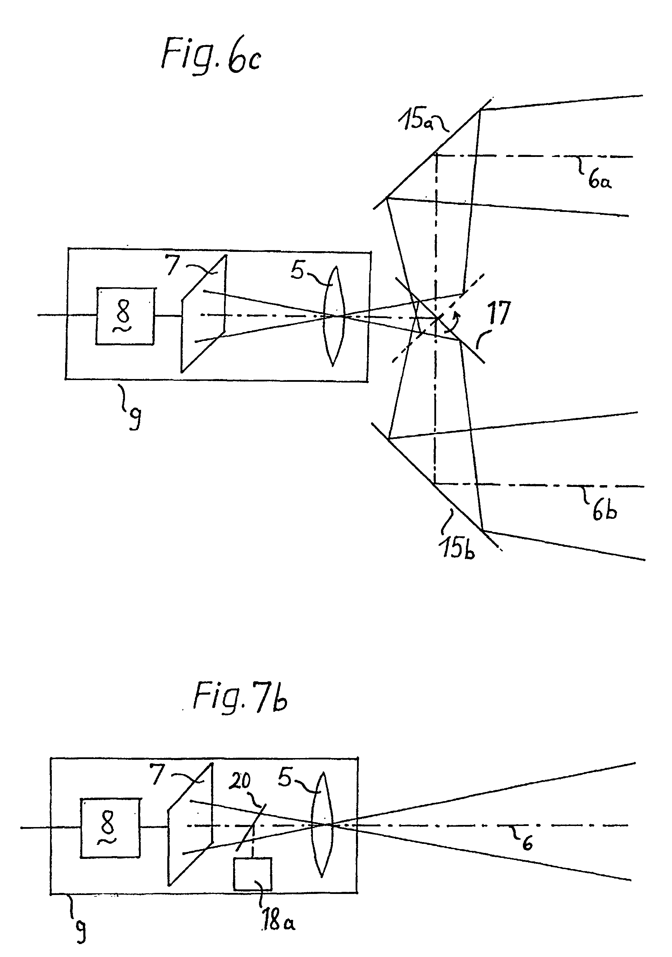

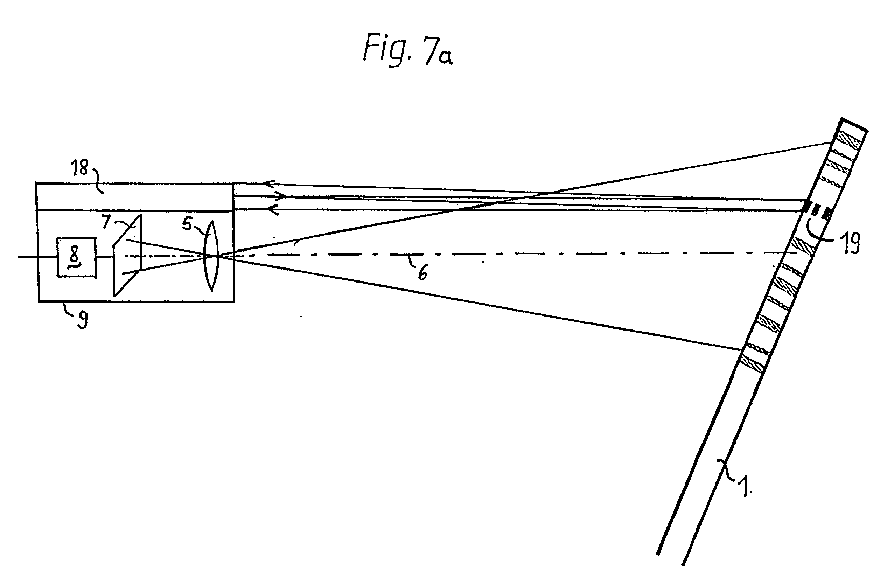

Es werden elektrooptische Distanzmeßgeräte 18, 18a bevorzugt. Sie werden z. B. gemäß Fig. 7a als eigenständiges Gerät mit dem Meßkopf 9 verbunden oder gemäß Fig. 7b in den Meßkopf 9 integriert. In Fig. 7a ist zudem schematisch eine kooperative Zielmarke 19 (Reflexionsfolie, Reflektor, Retroreflektor etc.) dargestellt, zu der die Entfernung gemessen wird. Selbstverständlich ist die Entfernungsmessung auch ohne Reflexionshilfen und nur auf die gegebene Oberfläche des Objektes 1 als unkooperatives Ziel möglich.

Die in Fig. 7b gezeigte Version eines integrierten Distanzmessers 18a hat den Vorteil, daß die Abbildungsoptik 5 des Meßkopfes 9 mitverwendet und die Entfernung entlang der optischen Achse 6 des Meßkopfes 9 bestimmt werden kann. Die Einkopplung des Emissionslichtes des Distanzmessers 18a in den optischen Strahlengang des Meßkopfes 9 bzw. die Auskopplung des empfangenen Lichtes zur Detektion im Distanzmesser 18a erfolgt beispielsweise über einen teildurchlässigen oder wellenlängenselektiven Spiegel 20.

Das elektrooptische Distanzmeßgerät 18, 18a wird üblicherweise im sichtbaren oder infraroten Wellenlängenbereich betrieben. Dabei werden Wellenlängen bevorzugt, die außerhalb der Empfindlichkeit des Detektors 7 des Meßkopfes 9 liegen oder es werden entsprechende Filter für den Detektor 7 oder / und für das Distanzmeßgerät 18, 18a verwendet. Bei Verwendung eines wellenlängenselektiven Spiegels 20 kann dieser gegebenenfalls das infrarote Licht des Distanzmeßgerätes 18a besonders gut reflektieren und zugleich das sichtbare Licht zum Detektor 7 des Meßkopfes 9 besonders gut transmittieren. Im übrigen können alle Arten von elektrooptischen Distanzmeßgeräten 18, 18a eingesetzt werden, auch solche die z.B. biaxial mit getrenntem Sende- und Empfangsstrahlengang aufgebaut sind oder die monoaxial denselben optischen Aufbau für die Sende- und Empfangsstrahlung zugleich nutzen.

## Patentansprüche

1. Verfahren zur Bestimmung der Position und Drehlage eines Objektes (1) im dreidimensionalen Raum unter Verwendung eines optischen Messkopfes (9, 9a, 9b, 9c) mit einer Abbildungsoptik (5), einem in zwei Dimensionen ortsauflösenden optoelektronischen Detektor (7) und einer Auswerteeinrichtung (8), wobei der im Gesichtsfeld der Abbildungsoptik (5) befindliche Teil des Objektes (1) auf den Detektor (7) abgebildet und detektiert wird und die detektierte Bildinformation der Auswerteeinrichtung (8) zugeführt wird, **dadurch gekennzeichnet, dass** in der Auswerteeinrichtung (8) zumindest von einem Teil des auf dem Detektor (7) abgebildeten Objektes (1) die Lage und der Verlauf der abgebildeten Objektstrukturen (2a;2b) auf dem Detektor (7) ermittelt wird und aus der Ortsabhängigkeit des Abbildungsmassstabes und der Verzeichnung der auf dem Detektor (7) abgebildeten Objektstrukturen (2a;2b) zusammen mit den Abbildungseigenschaften der Abbildungsoptik (5) die durch Lageparameter beschriebene Position und Drehlage des Objektes (1) im Raum bestimmt wird, wobei die Lageparameter unter Zuhilfenahme geometrischer Vektorgleichungen aus den abgebildeten Objektstrukturen (2a;2b) ermittelt werden und/oder die Lageparameter mit Hilfe von mathematischen Optimierungsverfahren so variiert werden, dass das daraus berechnete Detektorbild optimal oder zumindest hinreichend gut mit der detektierten Bildinformation des Objektes (1) übereinstimmt.

2. Verfahren nach Anspruch 1, **dadurch gekennzeichnet, daß** als Objektstruktur (2a;2b) die geometrische Form (2a) des Objektes (1) oder / und Markierungen auf dem Objekt (1) vom Meßkopf (9, 9a, 9b, 9c) aufgenommen und ausgewertet werden.

3. Verfahren nach Anspruch 1, **dadurch gekennzeichnet, daß** als Objektstruktur (2a;2b) ein auf dem Objekt (1) angebrachtes Codemuster (2b) vom Meßkopf (9, 9a, 9b, 9c) aufgenommen und ausgewertet wird.

4. Verfahren nach Anspruch 1, **dadurch gekennzeichnet, daß** die Objektstrukturen (2a;2b) als Codemuster (2b) auf einem mit dem Objekt (1) mechanisch verbindbaren separaten Körper (1a) aufgebracht werden.

5. Verfahren nach Anspruch 4, **dadurch gekennzeichnet, daß** mehrere mit einem Codemuster (2b) versehene Körper (1a) verwendet und mit dem Objekt (1) mechanisch verbunden werden.

6. Verfahren nach einem der vorhergehenden Ansprüche, **dadurch gekennzeichnet, daß** das Objekt (1) oder / und der Körper (1a) rohrförmig ausgebildet werden.

7. Verfahren nach Anspruch 6, **dadurch gekennzeichnet, daß** die Objektstrukturen (2a;2b) rotationssymmetrisch zur Längsachse des Objekts (1) oder/und des Körpers (1a) ausgebildet werden.

8. Verfahren nach Anspruch 6, **dadurch gekennzeichnet, daß** die Objektstrukturen (2a;2b) abwechselnd rotationssymmetrisch und parallel zur Längsachse des Objekts (1) oder / und des Körpers (1a) ausgebildet werden.

9. Verfahren nach einem der Ansprüche 1 bis 6, **dadurch gekennzeichnet, daß** die Objektstrukturen (2a;2b) spiralförmig ausgebildet werden.

10. Verfahren nach einem der Ansprüche 1 bis 6, **dadurch gekennzeichnet, daß** die Objektstrukturen (2a;2b) vollkommen unregelmäßig, aber hinsichtlich ihrer Lage auf dem Objekt (1) oder / und auf dem Körper (1a) eindeutig ausgebildet werden.

11. Verfahren nach einem der vorherigen Ansprüche, **dadurch gekennzeichnet, daß** zur Verbesserung der Meßgenauigkeit die Ortsgrundfrequenz oder eine harmonische Ortsoberfrequenz der von den Objektstrukturen (2a,2b) auf dem Detektor (7) erzeugten Intensitätsverteilung mit der Ortsgrundfrequenz der strahlungsempfindlichen Strukturen des Detektors (7) ein niederfrequentes Überlagerungsmuster bildet.

12. Verfahren nach einem der vorhergehenden Ansprüche, **dadurch gekennzeichnet, daß** das Objekt (1) beleuchtet wird oder daß das Objekt (1) oder die Objektstrukturen (2a,2b) selbstleuchtend sind.

13. Verfahren nach einem der vorhergehenden Ansprüche, **dadurch gekennzeichnet, daß** gleichzeitig mehrere optische Meßköpfe (9,9a,9b,9c) zur räumlichen Lagebestimmung eines Objektes (1) oder mehrerer Objekte (1) verwendet werden.

14. Verfahren nach einem der vorhergehenden Ansprüche, **dadurch gekennzeichnet, daß** das Objekt (1) stereoskopisch aufgenommen wird.

15. Verfahren nach Anspruch 14, **dadurch gekennzeichnet, daß** die stereoskopische Aufnahme mit zwei zueinander ausgerichteten oder ausrichtbaren optischen Meßköpfen (9a, 9b) oder mit einem optischen Meßkopf (9) und einem oder mehreren dazu ausgerichteten oder ausrichtbaren Spiegeln (15, 15a, 15b) erfolgt.

16. Verfahren nach einem der vorhergehenden Ansprüche, **dadurch gekennzeichnet, daß** die Entfernung zu dem Objekt (1) mit Hilfe eines Distanzmeßgerätes (18,18a) bestimmt wird.

17. Verfahren nach Anspruch 16, **dadurch gekennzeichnet, daß** die Distanzmessung elektrooptisch erfolgt und das Distanzmeßgerät (18,18a) am optischen Meßkopf (9) befestigt wird oder in den optischen Meßkopf (9) unter Mitverwendung der Abbildungsoptik (5) integriert wird.

18. Verfahren nach einem der vorhergehenden Ansprüche, **dadurch gekennzeichnet, daß** die die Position und / oder Drehlage des Objekts (1) beschreibenden Lageparameter in ein übergeordnetes Koordinatensystem transformiert werden.

19. Anwendung des Verfahrens nach einem der vorhergehenden Ansprüche, **dadurch gekennzeichnet, daß** das Objekt (1) ein in der medizinischen Diagnostik, Therapie oder bei Operationen eingesetztes Hilfsmittel ist.

20. Anwendung des Verfahrens nach Anspruch 19, **dadurch gekennzeichnet, daß** das Hilfsmittel ein Operationsmikroskop, ein Operationswerkzeug, ein mit einem Patienten verbundener Rahmen oder eine Strahlungsquelle zur Tumorbehandlung ist.

21. Anwendung des Verfahrens nach einem der Ansprüche 1 bis 18, **dadurch gekennzeichnet, daß** das Objekt (1) eine Nivellierlatte ist.

22. Anwendung des Verfahrens nach einem der Ansprüche 1 bis 18, **dadurch gekennzeichnet, daß** das Objekt (1) ein Geschützrohr oder eine Richt- oder Radarantenne ist.

**Claims**

1. Method for determining the spatial and rotational positions of an object (1) in three-dimensional space using an optical measuring head (9), 9a, 9b, 9c) comprising an imaging optical system (5), an optoelectronic detector (7) having positional resolution in two dimensions and an evaluation means (8), that part of the object (1) which is present in the field of view of the imaging optical system (5) being focused onto the detector (7) and being detected, the detected image information being fed to the evaluation means (8), **characterized in that** the position and the course of the focused object structures (2a; 2b) on the detector (7) are determined at least for a part of the object (1) focused on the detector (7), and the spatial and rotational positions of the object (1) in space which are described by positional parameters are determined from the positional dependence of the imaging scale and the record of the object structures (2a; 2b) focused on the detector (7), together with the imaging properties of the imaging optical system (5), the positional parameters being determined with the aid of geometric vector equations from the focused object structures (2a; 2b) and/or the positional parameters being varied with the aid of mathematical optimization methods so that the detector image calculated therefrom agrees optimally or at least sufficiently well with the detected image information of the object (1).

2. Method according to Claim 1, **characterized in that** the geometric shape (2a) of the object (1) and/or marks on the object (1) are recorded and evaluated as the object structure (2a; 2b) by the measuring head (9, 9a, 9b, 9c).

3. Method according to Claim 1, **characterized in that** a code pattern (2b) applied to the object (1) is recorded and evaluated as the object structure (2a; 2b) by the measuring head (9, 9a, 9b, 9c).

4. Method according to Claim 1, **characterized in that** the object structures (2a; 2b) are applied as a code pattern (2b) to a separate body (1a) which can be mechanically connected to the object (1).

5. Method according to Claim 4, **characterized in that** a plurality of bodies (1a) provided with a code pattern (2b) are used and are mechanically connected to the object (1).

6. Method according to any of the preceding Claims, **characterized in that** the object (1) and/or the body (1a) are tubular.

7. Method according to Claim 6, **characterized in that** the object structures (2a; 2b) are formed to be rotationally symmetrical with respect to the longitudinal axis of the object (1) and/or of the body (1a).

8. Method according to Claim 6, **characterized in that** the object structures (2a; 2b) are formed to be alternately rotationally symmetrical and parallel to the longitudinal axis of the object (1) and/or of the body (1a).

9. Method according to any of Claims 1 to 6, **characterized in that** the object structures (2a; 2b) have a spiral shape.

10. Method according to any of Claims 1 to 6, **characterized in that** the object structures (2a; 2b) are formed to be completely irregular but unique with respect to their position on the object (1) and/or on the body (1a).

11. Method according to any of the preceding Claims, **characterized in that**, for improving the accuracy of measurement, the spatial fundamental frequency or a spatial harmonic frequency of the intensity distribution produced by the object structures (2a; 2b) on the detector (7) forms a low-frequency superposition pattern with the spatial fundamental frequency of the radiation-sensitive structures of the detector (7).

12. Method according to any of the preceding Claims, **characterized in that** the object (1) is illuminated or that the object (1) or the object structures (2a, 2b) is or are luminous.

13. Method according to any of the preceding Claims, **characterized in that** a plurality of optical measuring heads (9, 9a, 9b, 9c) are used simultaneously for determining the spatial position of an object (1) or of a plurality of objects (1).

14. Method according to any of the preceding Claims, **characterized in that** the object (1) is recorded stereoscopically.

15. Method according to Claim 14, **characterized in that** the stereoscopic recording is carried out using two optical measuring heads (9a, 9b) which are aligned or can be aligned with one another, or using an optical measuring head (9) and one or more mirrors (15, 15a, 15b) which are aligned or can be aligned therewith.

16. Method according to any of the preceding Claims, **characterized in that** the distance to the object (1) is determined with the aid of a distance-measuring device (18, 18a).

17. Method according to Claim 16, **characterized in that** the distance measurement is effected electro-optically and the distance-measuring device (18, 18a) is fastened to the optical measuring head (9) or is integrated in the optical measuring head (9) with the concomitant use of the imaging optical system (5).

**18.** Method according to any of the preceding Claims, **characterized in that** the positional parameters describing the spatial position and/or rotational position of the object (1) are transformed into a superior coordinate system.

**19.** The use of the method according to any of the preceding Claims, **characterized in that** the object (1) is an aid used in medical diagnostics, therapy or operations.

**20.** The use of the method according to Claim 19, **characterized in that** the aid is an operating microscope, an operating tool, a frame connected to a patient or a radiation source for tumour treatment.

**21.** The use of the method according to any of Claims 1 to 18, **characterized in that** the object (1) is a surveyor's staff.

**22.** The use of the method according to any of Claims 1 to 18, **characterized in that** the object (1) is a gun barrel or a directional or radar antenna.

**Revendications**

**1.** Procédé de détermination de la position spatiale et de la position angulaire d'un objet (1) dans un espace tridimensionnel, avec utilisation d'une tête de mesure optique (9,9a,9b,9c) avec une optique de représentation (5), un détecteur (7) optoélectronique présentant une résolution locale dans deux directions, et un dispositif d'évaluation (8), la partie de l'objet (1) qui se trouve dans le champ de vision de l'optique de représentation (5) étant représentée sur le détecteur (7) et détectée, et l'information d'image détectée étant amenée au dispositif d'évaluation (8), **caractérisé en ce que** la position et l'allure des structures d'objet (2a; 2b) illustrées sur le détecteur (7), au moins d'une partie de l'objet (1) illustré sur le détecteur (7) sont déterminées dans le dispositif d'évaluation (8), et la position spatiale et la position angulaire de l'objet (1) dans l'espace, décrites par des paramètres de position, étant déterminées à partir de la dépendance locale de l'échelle de mesure de représentation et de la distorsion des structures d'objet (2a; 2b) illustrées sur le détecteur (7), conjointement avec les propriétés de représentation de l'optique d'illustration (5), les paramètres de position étant déterminés en s'aidant d'équations vectorielles géométriques à partir des structures d'objet (2a; 2b) illustrées et/ou les paramètres de position étant modifiés à l'aide de procédés d'optimisation mathématiques, de manière que l'image de détecteur calculée à partir de cela coïncide, de façon optimale ou au moins suffisamment bonne, avec l'information d'image détectée de l'objet (1).

**2.** Procédé selon la revendication 1, **caractérisé en ce que** la forme géométrique et/ou des marquages appliqués sur l'objet (1) sont enregistrés par la tête de mesure (9,9a,9b,9c) et évalués, à titre de structure d'objet (2a; 2b).

**3.** Procédé selon la revendication 1, **caractérisé en ce que** l'on enregistre par la tête de mesure (9,9a, 9b,9c) et l'on évalue, en tant que structure d'objet (2a;2b), un motif de code (2b) appliqué sur l'objet (1).

**4.** Procédé selon la revendication 1, **caractérisé en ce que** les structures d'objet (2a;2b) sont appliquées, sous forme de motif de code (2b), sur un corps (1a) séparé, susceptible d'être relié mécaniquement à l'objet (1).

**5.** Procédé selon la revendication 4, **caractérisé en ce que** plusieurs corps (1a) munis d'un motif de code (2b) sont utilisés et reliés mécaniquement à l'objet (1).

**6.** procédé selon l'une des revendications précédentes, **caractérisé en ce que** l'objet (1) et/ou le corps (1a) sont de configuration tubulaire.

**7.** Procédé selon la revendication 6, **caractérisé en ce que** les structures d'objet (2a;2b) sont de configuration répondant à une symétrie de rotation par rapport à l'axe longitudinal de l'objet (1) et/ou du corps (1a).

**8.** Procédé selon la revendication 6, **caractérisé en ce que** les structures d'objet (2a;2b) sont configurées de façon alternée en répondant à une symétrie de rotation et parallèlement à l'axe longitudinal de l'objet (1) et/ou du corps (1a).

**9.** Procédé selon l'une des revendications 1 à 6, **caractérisé en ce que** les structures d'objet (2a;2b) sont de forme spirale.

**10.** Procédé selon l'une des revendications 1 à 6, **caractérisé en ce que** les structures d'objet (2a;2b) sont complètement irrégulières, mais du point de vue de leur position, elles sont illustrées de façon univoque sur l'objet (1) et/ou sur le corps (1a).

**11.** Procédé selon l'une des revendications précédentes, **caractérisé en ce que**, afin d'améliorer la pression de mesure, la fréquence de base locale ou une fréquence harmonique locale de la distribution d'intensité produite par les structures d'objet (2a;2b) sur le détecteur (7) forme, avec la fréquence de base locale des structures, sensibles au rayonnement du détecteur (7), un motif de superposition à basse fréquence.

**12.** Procédé selon l'une des revendications précédentes, **caractérisé en ce que** l'objet (1) est illuminé, ou **en ce que** l'objet (1) ou les structures d'objet (2a; 2b) sont auto-éclairantes.

**13.** Procédé selon l'une des revendications précédentes, **caractérisé en ce que** l'on utilise simultanément plusieurs têtes de mesure (9,9a,9b,9c) pour la détermination de position spatiale d'un objet (1) ou de plusieurs objets (1).

**14.** Procédé selon l'une des revendications précédentes, **caractérisé en ce que** l'objet (1) est capté de façon stéréoscopique.

**15.** Procédé selon la revendication 14, **caractérisé en ce que** l'enregistrement stéréoscopique s'effectue avec deux têtes de mesure (9a;9b) optiques, orientées ou pouvant être orientées l'une vers l'autre, ou bien avec une tête de mesure optique (9) et un ou plusieurs miroirs (15,15a,15b), orientés ou pouvant être orientés vers celle-ci.

**16.** Procédé selon l'une des revendications précédentes, **caractérisé en ce que** la distance par rapport à l'objet (1) est déterminée à l'aide d'un télémètre (18,18a).

**17.** Procédé selon la revendication 16, **caractérisé en ce que** la mesure de distance se fait par voie électro-optique et le télémètre (18,18a) est fixé sur la tête de mesure optique (9) ou est intégré dans la tête de mesure optique (9) avec utilisation conjointe de l'optique de représentation (5).

**18.** Procédé selon l'une des revendications précédentes, **caractérisé en ce que** les paramètres de position décrivant la position spatiale et/ou la position angulaire de l'objet (1) sont transformés en un système de coordonnée hiérarchiquement supérieure.

**19.** Application du procédé selon l'une des revendications précédentes, **caractérisé en ce que** l'objet (1) est un moyen auxiliaire utilisé dans le diagnostic médical, la thérapie ou lors d'opérations.

**20.** Application du procédé selon la revendication 19, **caractérisé en ce que** le moyen auxiliaire est un microscope opératoire, un outil opératoire, un cadre relié à un patient ou une source de rayonnement pour le traitement des tumeurs.

**21.** Application du procédé selon l'une des revendications 1 à 18, **caractérisé en ce que** l'objet (1) est une nivelette ou mire parlante.

**22.** Application du procédé selon l'une des revendications 1 à 18, **caractérisé en ce que** l'objet (1) est un tube de canon ou bien une antenne directionnelle ou de radar.

EP 1 066 497 B1

# Fig.1

# Fig.2

# Fig.3

Fig.4

Fig.5a

Fig.5b

## Fig. 6a

## Fig. 6b

## Fig. 6c

## Fig. 7b

Fig. 7a